# FASCICULE DE BREVET EUROPEEN

(11) **EP 3 460 383 B1**
(45) Date de publication et mention de la délivrance du brevet: **03.11.2021**
(21) Numéro de dépôt: 18195745.7
(22) Date de dépôt: 20.09.2018
(51) Int. Cl.: G01B 3/20, G01B 5/06, F16D 66/02, B60T 17/22

(54) **OUTIL MANUEL ET METHODE POUR MESURER L'EPAISSEUR D'UN DISQUE DE FREIN D'UN VEHICULE AUTOMOBILE INDUSTRIEL AFIN D'EN DETERMINER L'USURE**
HANDWERKZEUG UND VERFAHREN ZUM MESSEN DER DICKE EINER BREMSSCHEIBE EINES INDUSTRIELLEN KRAFTFAHRZEUGS ZUR BESTIMMUNG IHRES VERSCHLEISSES
MANUAL TOOL AND METHOD FOR MEASURING THE THICKNESS OF A BRAKE DISC OF AN INDUSTRIAL MOTOR VEHICLE IN ORDER TO DETERMINE ITS WEAR

(30) Priorité: 25.09.2017 FR 1758821
(43) Date de publication de la demande: 27.03.2019
(73) Titulaire: KEOLIS, 75009 Paris (FR)
(72) Inventeur: NUNU, Pavel, 92000 NANTERRE (FR)
(74) Mandataire: Plasseraud IP

(56) Documents cités:
- WO-A1-2015/074113
- DE-U1-202014 100 797
- FR-A1- 2 883 961
- US-A- 5 884 240

## Description

La présente invention se rapporte à un outil manuel pour mesurer l'épaisseur d'un disque de frein afin d'en déterminer l'usure.

Le système de freinage d'un véhicule automobile, en particulier un bus, est un dispositif sécuritaire qui nécessite de la maintenance régulière. Les disques de frein qui sont utilisés à cet effet présentent une épaisseur nominale définie par le constructeur et une côte minimale à ne pas dépasser pour éviter une usure pouvant éventuellement provoquer un accident. En dessous de cette côte d'usure, il est obligatoire de remplacer le disque.

La vérification de l'épaisseur des disques se fait actuellement dans tous les ateliers de maintenance de véhicules industriels en démontant les roues. Les préconisations de maintenance imposent au minimum une vérification semestrielle de l'épaisseur des disques de frein. Une telle opération représente ainsi en moyenne un temps de 2 heures pour un véhicule de 12 mètres, et 3 heures pour un véhicule de 18 mètres. Lors d'une opération sur un seul essieu, cette complexité est un frein aux contrôles des autres essieux, empêchant ainsi la vision globale du dispositif de freinage. Par ailleurs, cette immobilisation empêche l'utilisation des véhicules contrôlés et nécessite un temps humain considérable lorsqu'il s'agit de gérer toute une flotte.

Les outils existants sur le marché ne permettent donc pas d'effectuer une mesure sans le démontage des roues, les disques de frein se trouvent dans des espaces très confinés.

WO 2015/5074113, FR 2883961, DE 202014100797 divulguent des dispositifs de mesure d'épaisseur d'un disque de frein. Ils comprennent une partie fixe apte à venir en contact avec une première surface du disque et une partie mobile relativement à la partie fixe apte à venir en contact avec une deuxième surface, opposée à la première surface, du disque. La distance entre les deux parties est indicative de l'épaisseur du disque.

Un but de la présente invention est donc de résoudre les problèmes cités précédemment à l'aide d'une solution simple à mettre en œuvre et à utiliser afin de fournir une mesure précise et fiable.

Plus précisément, la présente invention a pour objet un outil manuel pour mesurer l'épaisseur d'un disque de frein sans démonter la roue d'un véhicule automobile industriel afin de déterminer l'usure du disque, ledit outil comportant à cet effet au moins :
- des moyens de mesure adaptés pour venir au contact des surfaces opposées du disque, lesdits moyens de mesure étant pourvus d'une partie fixe et d'une partie mobile prévue pour se rapprocher de la partie fixe afin d'effectuer la mesure de l'épaisseur,
- des moyens d'affichage de la mesure effectuée, et
- des moyens de préhension, l'une et/ou l'autre de la partie mobile et de la partie fixe comportant un élément pour maintenir les moyens de mesure perpendiculaire aux surfaces opposées du disque sans que l'utilisateur n'ait besoin de tenir l'outil, les moyens de préhension comprenant une poignée et une branche, reliant la poignée à la partie fixe des moyens de mesure, la branche présentant une forme courbe afin de permettre l'insertion des moyens de mesure dans un espace défini entre le disque de frein, la roue et un pont disposé en regard de la roue.

Selon des modes de réalisation préférés de la présente invention :
- la branche courbe présente au moins un arc de cercle de sensiblement 110° ;
- la branche courbe présente deux arcs de cercle, séparés par un segment sensiblement rectiligne
- l'élément de maintien est magnétique ;
- l'élément de maintien est constitué par un aimant solidaire de la partie fixe ou de la partie mobile des moyens de mesure ;
- chaque partie des moyens de mesure est constituée d'une tige ; et
- la partie mobile des moyens de mesure comporte une tige et des moyens d'affichage qui coulissent à l'intérieur de la règle.

L'invention se rapporte également à une méthode pour mesurer, à l'aide d'un outil manuel, l'épaisseur d'un disque de frein sans démonter la roue d'un véhicule automobile industriel afin de déterminer l'usure du disque, ledit outil comportant à cet effet au moins :
- des moyens de mesure adaptés pour venir au contact des surfaces opposées du disque, lesdits moyens de mesure étant pourvus d'une partie fixe et d'une partie mobile prévue pour se rapprocher de la partie fixe afin d'effectuer la mesure de l'épaisseur,
- des moyens d'affichage de la mesure effectuée, et
- des moyens de préhension,

la méthode consistant à positionner, sur les surfaces opposées du disque, un élément appartenant à la partie mobile et/ou à la partie fixe de l'outil pour maintenir les moyens de mesure perpendiculaires auxdites surfaces, lesdits moyens de préhension comprenant une poignée et une branche, reliant la poignée à la partie fixe des moyens de mesure, la branche présentant une forme courbe afin de permettre l'insertion des moyens de mesure dans un espace défini entre le disque de frein, la roue et un pont disposé en regard de la roue.

Avantageusement, les moyens de mesure de l'outil sont positionnés par l'utilisateur au plus près du milieu du disque, à l'endroit où son épaisseur est la plus faible.

De manière préférée, les moyens de préhension de l'outil de mesure comportent une poignée qui est positionnée par l'utilisateur dans un espace confiné défini par un ensemble composé au moins d'une roue, d'un disque de frein et d'un pont de véhicule, la forme de la poignée épousant au plus près la forme dudit espace.

L'invention va maintenant être décrite plus en détail en référence à des modes de réalisation particuliers donnés à titre d'illustration uniquement et représentés sur les figures annexées dans lesquelles
- La figure 1 est une vue de côté d'un outil de mesure conforme à la présente invention ; et
- La figure 2 est une vue similaire à la figure 1 dans laquelle l'outil est en position d'utilisation.

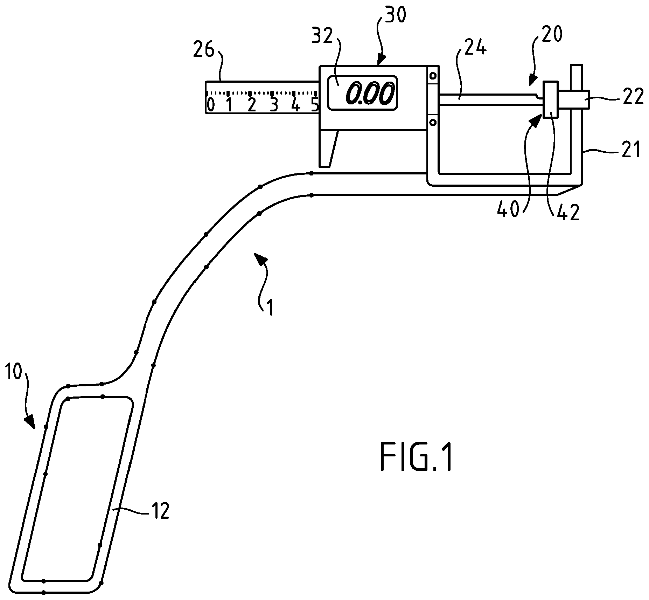

Les figures 1 à 2 représentent un outil manuel 1 de mesure de l'épaisseur E d'un disque de frein 5 appartenant à un véhicule automobile industriel tel qu'un bus de transport de personnes.

Cet outil 1 comprend :
- un organe de préhension 10 se présentant sous la forme d'une poignée 12,
- des moyens de mesure 20 composés d'un support 21 en forme de U, d'une tige statique 22 et d'une tige mobile 24, et
- des moyens 30 d'affichage de la mesure effectuée comportant dans le cas présent un écran à affichage numérique 32 précis au centième de millimètre.

Le support 21 supporte d'une part la tige statique 22 et d'autre part les moyens 30 d'affichage de la mesure effectuée.

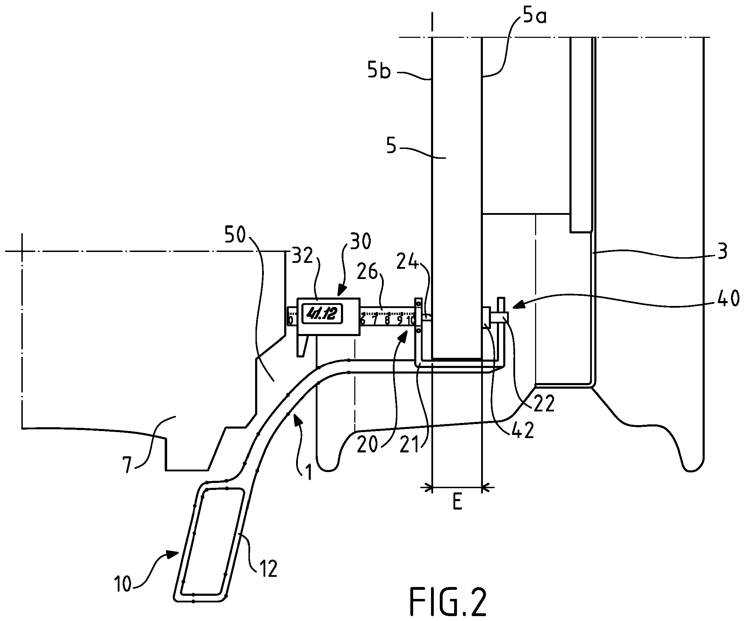

L'outil 1 comporte en outre un élément 40 pour maintenir les moyens de mesure 20 perpendiculaires aux surfaces opposées 5a et 5b du disque de frein 5 (voir figure 2), de manière à rendre la mesure de l'épaisseur de ce dernier la plus précise possible. En effet, une disposition inclinée des moyens de mesure 20 ne donneraient pas de bons résultats.

Plus précisément, cet élément 40 est magnétique et est constitué dans le cas présent par un disque aimanté 42 mesurant par exemple de 10 à 20 mm de diamètre, et avantageusement environ 15 à 16 mm de diamètre. Ce disque magnétique 42 est relié à l'extrémité de la tige statique 22 des moyens de mesure 20, par exemple par soudure.

La tige mobile 24 traverse quant à elle les moyens 30 d'affichage de la mesure effectuée et se prolonge par une règle graduée 26.

Le fonctionnement de cet outil 1 est très simple et est illustré par la figure 2.

Une fois le véhicule automobile industriel placé sur une aire de travail, telle qu'une fosse ou un pont élévateur, l'utilisateur approche par en dessous les moyens de mesure 20 de l'outil 1 dans une position dans laquelle la tige mobile 24 est suffisamment éloignée de l'aimant 42 pour que le support 21 « chevauche » le disque 5. Comme l'outil conforme à la présente invention est utilisable sans démontage d'aucune partie du véhicule automobile, en particulier sans démonter la roue 3, l'utilisateur doit le placer d'une certaine façon. Pour cela, la forme particulière de la poignée 12 est adaptée pour épouser, avec un certain jeu de quelques millimètres à quelques centimètres, typiquement entre 2 et 20 mm, un espace confiné 50 défini par un ensemble comportant au moins une jante de roue 3, un disque de frein 5 et un pont 7 du véhicule.

Une fois la poignée 12 bien positionnée, l'utilisateur vient plaquer l'aimant 42 sur la face 5a du disque 5 puis il rapproche la tige mobile 24 afin qu'elle vienne au contact de la face opposée 5b dudit disque de frein 5. Le disque de frein 5 étant fabriqué dans un matériau magnétique tel que de l'acier, l'aimant 42 permet de positionner les moyens de mesure 20 parfaitement perpendiculaire audit disque 5. Cet aimant 42 permet également à l'outil 1 de rester en place de sorte que l'utilisateur peut même lâcher la poignée et lire la mesure de l'épaisseur E sur l'écran 32 des moyens d'affichage 30. La lecture peut se faire également une fois l'outil 1 retiré car les moyens d'affichage 30 conservent la valeur de l'épaisseur E du disque 5 mesurée dans la zone de mesure.

Afin de rendre la mesure plus précise, les tiges fixes 24 et mobiles 22 seront avantageusement placées au plus près du milieu du disque 5, là où son usure est normalement maximum.

En fonction de la mesure affichée, l'utilisateur pourra déterminer si l'épaisseur E du disque 5 entre ou non dans la plage de mesure. Si l'épaisseur E est sous un certain seuil alors il ordonnera son changement.

L'outil et la méthode de mesure conformes à la présente invention permettent de mesurer efficacement l'usure des disques de frein d'un véhicule automobile industriel, sans avoir à démonter la roue ou un autre élément dudit véhicule. Cette mesure est par ailleurs très précise et très rapide, de l'ordre de quelques minutes par véhicule selon sa taille (moins de 7 minutes pour un véhicule de 12 mètres et moins de 10 minutes pour un véhicule de 18 mètres), alors qu'auparavant cela pouvait prendre 2 à 3 heures pour vérifier un véhicule complet, avec un risque au démontage/remontage des roues (mauvais serrage des écrous par exemple).

Il doit être bien entendu que la description détaillée de l'objet de l'invention, donnée uniquement à titre d'illustration, ne constitue en aucune manière une limitation, les équivalents techniques étant également compris dans le champ de la présente invention tel que défini dans les revendications 1 à 10.

Ainsi, un aimant peut être positionné sur chacune des deux tiges. La forme et les dimensions de chaque aimant peuvent bien entendu varier tant que l'élément 40 permet de conserver les moyens de mesure 20 perpendiculaires aux surfaces opposées 5a et 5b du disque 5 dont l'épaisseur E est mesurée. En alternative, les tiges elles-mêmes peuvent être aimantées.

## Revendications

1. Outil manuel (1) pour mesurer l'épaisseur d'un disque de frein (5) sans démonter la roue (3) d'un véhicule automobile industriel afin de déterminer l'usure du disque, ledit outil comportant à cet effet au moins :
- des moyens de mesure (20) adaptés pour venir au contact des surfaces opposées (5a, 5b) du disque (5), lesdits moyens de mesure (20) étant pourvus d'une partie fixe (22) et d'une partie mobile (24) prévue pour se rapprocher de la partie fixe (22) afin d'effectuer la mesure de l'épaisseur (E),
- des moyens (30) d'affichage de la mesure effectuée, et
- des moyens de préhension (10),
l'une et/ou l'autre de la partie mobile (24) et de la partie fixe (22) comportant un élément (40) pour maintenir les moyens de mesure (20) perpendiculaires aux surfaces opposées (5a, 5b) du disque (5) sans que l'utilisateur n'ait besoin de tenir l'outil (1),
**caractérisé en ce que** les moyens de préhension (10) comprennent une poignée (12) et une branche, reliant la poignée (12) à la partie fixe (22) des moyens de mesure, la branche présentant une forme courbe afin de permettre l'insertion des moyens de mesure (20) dans un espace défini entre le disque de frein (5), la roue (3) et un pont (7) disposé en regard de la roue (3).

2. Outil (1) selon la revendication 1, **caractérisé en ce que** la branche courbe présente au moins un arc de cercle de sensiblement 110°.

3. Outil (1) selon l'une quelconque des revendications 1 ou 2, **caractérisé en ce que** la branche courbe présente deux arcs de cercle, séparés par un segment sensiblement rectiligne.

4. Outil (1) selon l'une quelconque des revendications 1 à 3, **caractérisé en ce que** l'élément de maintien (40) est magnétique.

5. Outil (1) selon l'une quelconque des revendications 1 à 4, **caractérisé en ce que** l'élément de maintien (40) est constitué par un aimant (42) solidaire de la partie fixe (22) des moyens de mesure (20) .

6. Outil (1) selon l'une quelconque des revendications 1 à 5, **caractérisé en ce que** l'élément de maintien (40) est constitué par un aimant (42) solidaire de la partie mobile (22) des moyens de mesure (20).

7. Outil (1) selon l'une quelconque des revendications précédentes, **caractérisé en ce que** chaque partie (22, 24) des moyens de mesure (20) est constituée d'une tige.

8. Outil (1) selon l'une quelconque des revendications précédentes, **caractérisé en ce que** la partie mobile (24) des moyens de mesure comporte une tige (24) et des moyens d'affichage (30) qui coulissent à l'intérieur de la règle (26).

9. Procédé de mesure, à l'aide d'un outil manuel (1), de l'épaisseur (E) d'un disque de frein (5) sans démonter la roue (3) d'un véhicule automobile industriel afin de déterminer l'usure du disque, ledit outil (1) comportant à cet effet au moins :
- des moyens de mesure (20) adaptés pour venir au contact des surfaces opposées (5a, 5b) du disque (5), lesdits moyens de mesure (20) étant pourvus d'une partie fixe (22) et d'une partie mobile (24) prévue pour se rapprocher de la partie fixe (22) afin d'effectuer la mesure de l'épaisseur,
- des moyens d'affichage (30) de la mesure effectuée, et
- des moyens de préhension (10),
consistant à positionner, sur les surfaces opposées (5a, 5b) du disque (5), un élément (40) appartenant à la partie mobile (24) et/ou à la partie fixe (22) de l'outil (1) pour maintenir les moyens de mesure (20) perpendiculaires auxdites surfaces,
**caractérisé en ce que** les moyens de préhension (10) comprennent une poignée (12) et une branche, reliant la poignée (12) à la partie fixe (22) des moyens de mesure, la branche présentant une forme courbe afin de permettre l'insertion des moyens de mesure (20) dans un espace défini entre le disque de frein (5), la roue (3) et un pont (7) disposé en regard de la roue (3).

10. Procédé de mesure selon la revendication 9, **caractérisé en ce que** les moyens de mesure (20) de l'outil (1) sont positionnés par l'utilisateur au plus près du milieu du disque (5), à l'endroit où son épaisseur est la plus faible.

## Patentansprüche

1. Manuelles Werkzeug (1) zum Messen der Dicke einer Bremsscheibe (5), ohne das Rad (3) eines Nutzfahrzeugs zu demontieren, um den Verschleiß der Scheibe zu bestimmen, wobei das Werkzeug zu diesem Zweck wenigstens umfasst:
- Messmittel (20), die angepasst sind, um mit gegenüberliegenden Oberflächen (5a, 5b) der Scheibe (5) in Kontakt zu kommen, wobei die Messmittel (20) mit einem feststehenden Teil (22) und einem beweglichen Teil (24) ausgestattet sind, der dazu vorgesehen ist, sich dem feststehenden Teil (22) zu nähern, um die Dicke (E) zu messen,
- Anzeigemittel (30) für die durchgeführte Messung, und
- Greifmittel (10),
wobei der bewegliche Teil (24) oder/und der feststehende Teil (22) ein Element (40) umfasst, um die Messmittel (20) senkrecht zu den gegenüberliegenden Oberflächen (5a, 5b) der Scheibe (5) zu halten, ohne dass der Benutzer das Werkzeug (1) halten muss,
**dadurch gekennzeichnet, dass** die Greifmittel (10) einen Griff (12) und einen Stiel umfassen, der den Griff (12) mit dem feststehenden Teil (22) der Messmittel verbindet, wobei der Stiel eine gebogene Form hat, um das Einführen der Messmittel (20) in einen Raum zu ermöglichen, der zwischen der Bremsscheibe (5), dem Rad (3) und einer dem Rad (3) gegenüberliegenden Achse (7) definiert ist.

2. Werkzeug (1) nach Anspruch 1, **dadurch gekennzeichnet, dass** der gebogene Stiel mindestens einen Kreisbogen von im Wesentlichen 110° aufweist.

3. Werkzeug (1) nach einem der Ansprüche 1 oder 2, **dadurch gekennzeichnet, dass** der gebogene Stiel zwei Kreisbögen aufweist, die durch ein im Wesentlichen geradliniges Segment getrennt sind.

4. Werkzeug (1) nach einem der Ansprüche 1 bis 3, **dadurch gekennzeichnet, dass** das Element (40) zum Halten magnetisch ist.

5. Werkzeug (1) nach einem der Ansprüche 1 bis 4, **dadurch gekennzeichnet, dass** das Element (40) zum Halten aus einem Magneten (42) besteht, der fest mit dem feststehenden Teil (22) der Messmittel (20) verbunden ist.

6. Werkzeug (1) nach einem der Ansprüche 1 bis 5, **dadurch gekennzeichnet, dass** das Element (40) zum Halten aus einem Magneten (42) besteht, der fest mit dem beweglichen Teil (22) der Messmittel (20) verbunden ist.

7. Werkzeug (1) nach einem der vorhergehenden Ansprüche, **dadurch gekennzeichnet, dass** jeder Teil (22, 24) der Messmittel (20) aus einem Stab besteht.

8. Werkzeug (1) nach einem der vorhergehenden Ansprüche, **dadurch gekennzeichnet, dass** der bewegliche Teil (24) der Messmittel einen Stab (24) und Anzeigemittel (30) aufweist, die im Inneren der Messlatte (26) verschiebbar sind.

9. Verfahren zum Messen der Dicke (E) einer Bremsscheibe (5) mit einem manuellen Werkzeug (1), ohne das Rad (3) eines Nutzfahrzeugs zu demontieren, um den Verschleiß der Scheibe zu bestimmen, wobei das Werkzeug (1) zu diesem Zweck mindestens umfasst:
- Messmittel (20), die angepasst sind, um mit gegenüberliegenden Oberflächen (5a, 5b) der Scheibe (5) in Kontakt zu kommen, wobei die Messmittel (20) mit einem feststehenden Teil (22) und einem beweglichen Teil (24) ausgestattet sind, der dazu vorgesehen ist, um sich dem feststehenden Teil (22) zu nähern, um die Messung der Dicke durchzuführen,
- Anzeigemittel (30) für die durchgeführte Messung, und
- Greifmittel (10),
umfassend das Positionieren eines Elements (40), das zum beweglichen Teil (24) oder/und zum festen Teil (22) des Werkzeugs (1) gehört, an den gegenüberliegenden Oberflächen (5a, 5b) der Scheibe (5), um die Messmittel (20) senkrecht zu den Oberflächen zu halten,
**dadurch gekennzeichnet, dass** die Greifmittel (10) einen Griff (12) und einen Stiel umfassen, der den Griff (12) mit dem feststehenden Teil (22) der Messmittel verbindet, wobei der Stiel eine gebogene Form hat, um das Einführen der Messmittel (20) in einen Raum zu ermöglichen, der zwischen der Bremsscheibe (5), dem Rad (3) und einer dem Rad (3) gegenüberliegenden Achse (7) definiert ist.

10. Messverfahren nach Anspruch 9, **dadurch gekennzeichnet, dass** die Messmittel (20) des Werkzeugs (1) vom Benutzer möglichst nahe der Mitte der Scheibe (5) an der Stelle positioniert werden, an der ihre Dicke am geringsten ist.

## Claims

1. A manual tool (1) for measuring the thickness of a brake disc (5) without removing the wheel (3) of an industrial motor vehicle in order to determine the wear of the disc, said tool including for this purpose at least:
- measuring means (20) adapted to contact the opposite surfaces (5a, 5b) of the disc (5), said measuring means (20) being provided with a stationary part (22) and a movable part (24) provided to move closer to the stationary part (22) in order to measure the thickness (E),
- means (30) for displaying the measurement carried out, and
- gripping means (10),
one and/or the other of the movable part (24) and the stationary part (22) including an element (40) for keeping the measuring means (20) perpendicular to the opposite surfaces (5a, 5b) of the disc (5) without the user having to hold the tool (1),
**characterised in that** the gripping means (10) comprise a handle (12) and a branch, connecting the handle (12) to the stationary part (22) of the measuring means, the branch having a curved shape in order to allow the insertion of the measuring means (20) into a space defined between the brake disc (5), the wheel (3) and a bridge (7) disposed opposite the wheel (3).

2. The tool (1) according to claim 1, **characterised in that** the curved branch has at least one circular arc of substantially 110°.

3. The tool (1) according to any one of claims 1 or 2, **characterised in that** the curved branch has two arcs of a circle, separated by a substantially rectilinear segment.

4. The tool (1) according to any one of claims 1 to 3, **characterised in that** the holding element (40) is magnetic.

5. The tool (1) according to any one of claims 1 to 4, **characterised in that** the holding element (40) consists of a magnet (42) integral with the stationary part (22) of the measuring means (20).

6. The tool (1) according to any one of claims 1 to 5, **characterised in that** the holding element (40) consists of a magnet (42) integral with the movable part (22) of the measuring means (20).

7. The tool (1) according to any one of the preceding claims, **characterised in that** each part (22, 24) of the measuring means (20) consists of a rod.

8. The tool (1) according to any one of the preceding claims, **characterised in that** the movable part (24) of the measuring means includes a rod (24) and display means (30) which slide inside the ruler (26).

9. A method for measuring, using a manual tool (1), the thickness (E) of a brake disc (5) without removing the wheel (3) of an industrial motor vehicle in order to determine the wear of the disc, said tool (1) including for this purpose at least:
- measuring means (20) adapted to contact the opposite surfaces (5a, 5b) of the disc (5), said measuring means (20) being provided with a stationary part (22) and a movable part (24) provided to move closer to the stationary part (22) in order to measure the thickness,
- means (30) for displaying the measurement carried out, and
- gripping means (10),
consisting in positioning, on the opposite surfaces (5a, 5b) of the disc (5), an element (40) belonging to the movable part (24) and/or to the stationary part (22) of the tool (1) for keeping the measuring means (20) perpendicular to said surfaces,
**characterised in that** the gripping means (10) comprise a handle (12) and a branch, connecting the handle (12) to the stationary part (22) of the measuring means, the branch having a curved shape in order to allow the insertion of the measuring means (20) into a space defined between the brake disc (5), the wheel (3) and a bridge (7) disposed opposite the wheel (3).

10. The measuring method according to claim 9, **characterised in that** the measuring means (20) of the tool (1) are positioned by the user as close as possible to the middle of the disc (5), at the location where its thickness is the smallest.
